# EUROPEAN PATENT SPECIFICATION

(11) **EP 2 103 863 B1**
(45) Date of publication and mention of the grant of the patent: **19.01.2011**
(21) Application number: 09003697.1
(22) Date of filing: 13.03.2009
(51) Int. Cl.: F17C 13/00, F17C 13/02

(54) **Apparatus for detecting position of liquid surface and determining liquid volume**
Vorrichtung zur Detektion der Position von flüssigen Oberflächen und Bestimmung des Flüssigkeitsvolumens
Appareil de détection de position d'une surface liquide et détermination de volume liquide

(30) Priority: 17.03.2008 JP 2008068336
(43) Date of publication of application: 23.09.2009
(73) Proprietor: Japan Aerospace Exploration Agency, Chofu-shi, Tokyo (JP)
(72) Inventor: Kawasaki, Haruo, Tsukuba-shi Ibaraki (JP)
(74) Representative: Müller-Boré & Partner Patentanwälte

(56) References cited:
- EP-A1- 0 345 833
- EP-A1- 0 397 480
- DE-C1- 19 810 638
- US-A- 3 161 050
- US-A- 4 449 403
- US-A- 4 592 230
- US-A- 4 929 930
- US-A- 5 209 115
- US-A1- 2001 035 827

## Description

### BACKGROUND OF THE INVENTION

### 1. Field of the Invention

The present invention relates to an apparatus for, with regard to a liquid contained in a vessel such as a tank, detecting a position of a liquid surface in the vessel and determining a liquid volume in the vessel. In particular, the present invention relates to an apparatus capable of determining a remaining amount of liquid fuel in a fuel tank mounted to an artificial satellite or the like, with a high degree of accuracy.

### 2. Description of the Background Art

An artificial satellite and other advanced spacecrafts are equipped with a tank containing therein liquid fuel or liquid oxidant. In view of ensuring adequate navigation and attitude control of an artificial satellite or the like, it is critical to accurately figure out a remaining amount of the liquid fuel or liquid oxidant in the tank.

Under a general environment on the Earth, i.e., under normal gravity, a surface of a liquid contained in a tank is maintained horizontally (i.e., on a level) according to a hydrostatic pressure. Thus, a position of the liquid surface in the tank can be detected without significant difficulty, and an amount of the liquid in the tank can also be readily figured out by detecting the position of the liquid surface in the tank, in some way

In contrast, the liquid fuel or liquid oxidant tank mounted to the artificial satellite or the like is used under a microgravity environment. Under the microgravity environment, a shape of a surface of a liquid contained in a tank is largely dominated by a surface tension. Specifically, irrespective of a vertical position of the tank, the liquid surface is deformed into a shape which allows a surface tension to be balanced. Consequently, differently from the horizontal shape in the Earth's gravitational environment, the liquid surface has a curved shape. This precludes a possibility of readily detecting a position of the liquid surface in the tank to figure out an amount of the liquid as in the case under normal gravity.

With this point in view, in a liquid fuel tank for a blow-down system, where no supply of gas is performed during discharge of a liquid from the tank, a pressure-volume-temperature (PVT) method has been employed which is designed to measure a pressure and a temperature of a gas phase in the tank and calculate a volume of the gas phase according to the Boyle-Charle's law. However, it is considered that this method has difficulty in accurately determining an amount of the liquid when the amount of the liquid is relatively small.

As a technique of determining a volume of a liquid contained in a vessel under a microgravity environment, there has been proposed a method using an acoustic signal (see JP 2006-308565A). In the JP 2006-308565A, it is described that this method can accurately determine a volume of the liquid in the vessel even if an amount of the liquid is relatively small. However, this method cannot be implemented without a design task for a new tank having difficulty in design change or without a complicate measurement system comprising an acoustic generation device and a signal processing device.

As above, until now, it has not been achieved to obtain an apparatus capable of, under a microgravity environment, accurately determining a remaining amount of a liquid, such as liquid fuel, contained in a tank, with a simple structure.
[Patent Document 1] JP 2006-308565A
[Patent Document 2] U.S. Patent No. 5,209,115
[Non-Patent Document 1] Journal of Spacecraft and Rockets, Vol. 37, No. 6, pp 833-835 (2000)

US 5 209 115 A discloses a liquid detector for thin-walled tanks operating in a zero gravity environment. The liquid detector includes a small heater and two thermistors positioned on either side of the heater and diametrically opposed to each other. The heater and two thermistors are located on the outside of a propellant tank. One of the thermistors is positioned directly over a region where a propellant management device (PMD) retains liquid. The other thermistor is spaced apart from the region, while the heater is proximate to the region: In operation, the heater is activated for a short period of time and the change in temperature at each of the two thermistors is observed. The temperature of a thermistor located over a spot having liquid propellant in contact with the tank wall will increase less than the temperature of the thermistor located at a spot where no liquid propellant is present. By monitoring the temperatures of the thermistors, it is possible to determine if liquid is present and based on the volumetric capacity of the PMD, how much liquid propellant remains in the tank.

### SUMMARY OF THE INVENTION

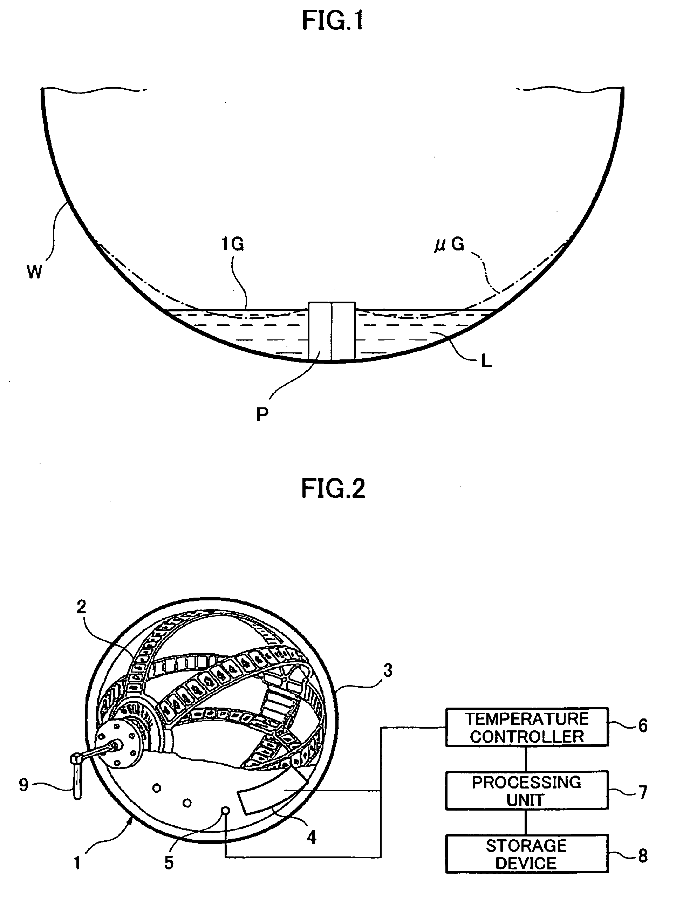

A shape of a surface of a liquid contained in a tank mounted to an artificial satellite or the like is changed depending on gravitational environments. FIG. 1 is a schematic diagram showing a change in shape of a surface of a liquid L contained in a spherical-shaped tank W, due to a gravitational change. When the tank W is placed in a stationary manner under a normal gravity environment, a gas-liquid interface is maintained in a planar shape. Then, when the gravity is lowered, for example, in a cosmic environment, the gas-liquid interface is more strongly dominated by a surface tension than the microgravity, and thereby deformed into a curved shape, as indicated by the one-dot chain line µG in FIG 1. In this manner, even if a volume of the liquid in the tank W is kept constant, the shape of the liquid surface is changed depending on a magnitude of gravity, and a contact area between the liquid L and an inner wall surface of the tank W is also changed. In this situation, it is not impossible to estimate a position of the liquid surface under a certain condition with a certain degree of accuracy, for example, by running a simulation based on a relationship between a magnitude of gravity acting on a liquid having a given volume, and a position of a surface of the liquid. However, in cases where various tank components are housed in the tank W, it is necessary to perform a complicate calculation for estimating the position of the liquid surface, and thereby it becomes difficult to verify credibility of an obtained calculation result.

Thus, there exists a need for a technique which allows an amount of a liquid, such as liquid fuel, to be determined based on information about a position of a surface of the liquid, with a high degree of accuracy, even under a condition that a remaining amount of the liquid in the tank is relatively small, wherein the conventional technique has difficulty in accurately determining the amount of the liquid under such a condition due to an error in detection of the position of the liquid surface. It is therefore an object of the present invention to provide an apparatus capable of, even under a microgravity environment, detecting a position of a surface of a liquid, such as liquid fuel, contained in a tank housing various tank components, and determining a volume of the liquid, in a simple and accurate manner.

Through various researches, the inventor of this application found that, when a liquid contained in a tank is heated from outside the tank, and a temperature rise of a peripheral wall of the tank which occurs due to the heating is measured, a temperature rise rate is dependent on an amount of liquid in contact with a temperature measurement portion of the wall, wherein, even though the liquid is heated at each of a plurality of positions of the wall with the same heat energy, a wall portion in contact with a relatively large amount of liquid has a relatively low temperature rise rate, whereas a wall portion in contact with a relatively small amount of liquid or in contact with only a gas without contacting the liquid has a relatively high temperature rise rate. Based on this knowledge, the inventor has reached the present invention.

According to an example not covered by the set of claims, there is provided an apparatus which comprises a vessel adapted to contain therein a liquid, heating means provided on a wall surface of the vessel to heat the liquid contained in the vessel, temperature measuring means provided adjacent to the heating means to measure a temperature change occurring due to the heating by the heating means, and processing means operable, based on the temperature change measured by the temperature measuring means, to calculate a volume of the liquid contained in the vessel, whereby the apparatus can determine a volume of the liquid contained in the vessel.

According to an aspect of the present invention, there is provided an apparatus which comprises a vessel adapted to contain therein a liquid, a plurality of heating means each provided on a wall surface of the vessel to heat the liquid contained in the vessel, a plurality of temperature measuring means each provided adjacent to a respective one of the plurality of heating means in at least one-to-one correspondence therewith to measure a temperature change occurring due to the heating by a corresponding one of the plurality of heating means, and processing means operable, based on the temperature change measured by a respective at least one of the plurality of temperature measuring means, to calculate a position of a surface of the liquid located adjacent to the respective at least one of the plurality of the temperature measuring means, whereby the apparatus can detect a position of a surface of the liquid contained in the vessel.

Preferably, in the apparatus according to the aspect of the present invention, the plurality of temperature measuring means are arranged at even intervals on a part or an entirety of an arc which extends along the wall surface of the vessel to connect a top and a bottom of the vessel.

Preferably, in the apparatus according to the aspect of the present invention, the processing means is further operable, based on the calculated positions of the liquid surfaces, to calculate a volume of the liquid contained in the vessel.

As above, the present invention allows for a high-accuracy determination of a liquid volume with a simple system. In addition, the present invention makes it possible to figure out a remaining amount of liquid in a tank, with a high degree of accuracy, so as to accurately estimate an operating life of an artificial satellite.

### BRIEF DESCRIPTION OF THE DRAWINGS

FIG 1 is a schematic diagram showing a change in shape of a liquid surface in a tank, due to a gravitational change.
FIG. 2 is a schematic diagram showing a configuration of an apparatus for determining a liquid volume, according to one embodiment of the present invention.
FIG 3 is a schematic diagram showing a liquid heating operation and a temperature measuring operation.
FIG 4 is a graph for explaining a technique of estimating an amount of liquid under an ideal condition that a wall of a spherical-shaped tank having an internal volume of 1 m³ is fully covered by a liquid.
FIG. 5 is a graph for explaining a technique of estimating an amount of liquid under a condition that the amount of the liquid is relatively small.
FIG. 6 is a schematic diagram showing a configuration of an apparatus for detecting a position of a liquid surface, according to another embodiment of the present invention.
FIG. 7 is a schematic diagram showing an apparatus for estimating a position of a liquid surface based on a temporal temperature change.
FIGS. 8(a) and 8(b) are graphs showing respective detection position dependences of a temporal temperature change (FIG. 8(a)) and a temperature distribution (FIG. 8(b)) which are detected by a plurality of temperature sensors.

### DESCRIPTION OF THE PREFERRED EMBODIMENTS

### A. Apparatus for Determining Liquid Volume

FIG 2 is a schematic diagram showing a configuration of an apparatus for determining a liquid volume, according to one embodiment of the present invention. This apparatus comprises a tank 1 adapted to contain therein a liquid, such as liquid fuel or liquid oxidant for use in an artificial satellite or the like. The tank 1 is a conventional type which is provided with a channel 2 extending along an inner wall surface of the tank 1, and a multilayer heat insulator (MLI) 3 covering an outer wall surface of the tank 1, and adapted to discharge the liquid therein from a discharge port 9 according to need.

A heater 4 is provided between the outer wall surface of the tank 1 and an inner surface of the MLI 3, to heat the liquid contained in the tank 1. In this manner, the heater 4 is arranged on an inner side of the MLI 3, so that power consumption due to the heater 4 can be effectively reduced. Further, a temperature sensor 5 is provided adjacent to the heater 4, to measure a change in temperature of the wall of the tank 1 which occurs due to the heating by the heater 4. The temperature sensor 5 is also arranged on the inner side of the MLI 3, so that an influence of an external thermal environment on the temperature sensor 5 can be suppressed to measure the temperature of the wall of the tank 1 with a higher degree of accuracy. Each of the heater 4 and the temperature sensor 6 is electrically connected to a processing unit 7 via a temperature controller 6 operable to control the heater 4 while monitoring the temperature thereof the wall of the tank 1. The processing unit 7 is connected to a storage device 8 which pre-stores therein data about a correlation between a temperature change and a liquid volume. The temperature change measured by the temperature sensor 5 is input into the processing unit 7, and the correlation data is read into the processing unit 7. Then, the processing unit 7 is operable, based on the input temperature change and the read correlation data, to calculate a volume of the liquid contained in the tank 1 and output an obtained calculation result.

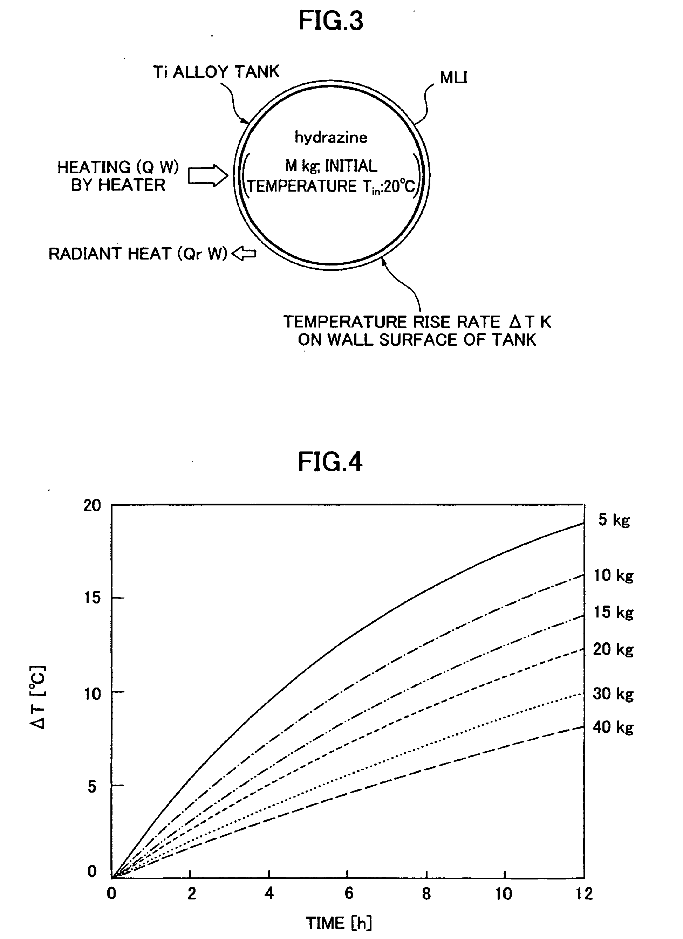

FIG. 3 schematically shows the liquid heating operation and the temperature measuring operation in the apparatus illustrated in FIG. 2. On an assumption that the tank having the MLI is made of a titanium alloy, and the liquid contained in the tank is hydrazine which serves as liquid fuel and has a mass of M kg and an initial temperature of 20°C, when the liquid is heated by giving thereto heat Q W per unit time from a heater provided outside the tank, the heat is partially lost by Qr W in the form of radiant heat, and the remaining heat is used for increasing a temperature of the wall of the tank and the liquid contained in the tank. Thus, the temperature of an outer wall surface of the tank is increased by ΔT per unit time.

FIG. 4 shows a technique of measuring such a temperature change to estimate a volume of the liquid contained in the tank. If the tank is filled with the liquid at a sufficient fill ratio (a ratio of a volume of the liquid to an internal volume of the tank) under a microgravity environment, the liquid is likely to attach on an inner wall surface of the tank at an even thickness, although such a situation never happen under a normal gravity environment. When it is estimated that a liquid surface in the tank has such a shape, data about a liquid mass dependence of a temperature rise rate at a given thermal dose as shown in FIG 4 is acquired in advance, and an amount of the liquid can be estimated based on the pre-acquired data and an actually measured temperature change. FIG 4 shows a liquid mass dependence of a temperature rise rate at a given thermal dose, in respective cases where the liquid (hydrazine) is contained in a spherical-shaped tank having an internal volume of 1 m³, in a mass of 5 kg (at a fill ratio of about 0.5%), a mass of 10 kg (at a fill ratio of about 0.1%), a mass of 15 kg (at a fill ratio of about 1.5%), a mass of 20 kg (at a fill ratio of about 2%), a mass of 30 kg (at a fill ratio of about 3%) and a mass of 40 kg (at a fill ratio of about 4%).

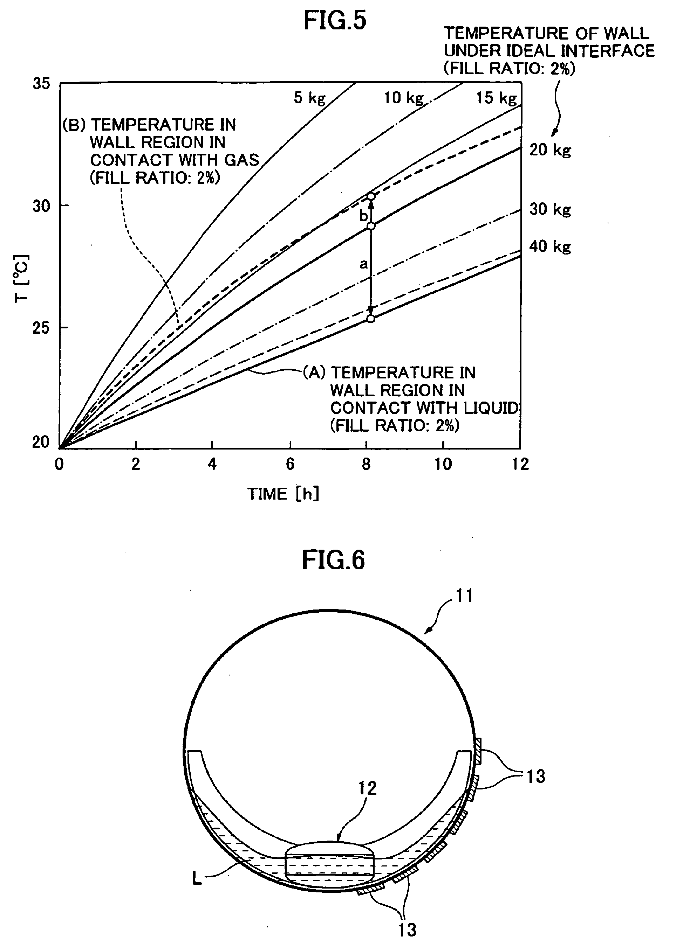

An actual tank for use in cosmic environments is equipped with an internal component as shown in FIG 1 and a liquid holding mechanism. Thus, when an amount of the liquid is reduced, the liquid surface is changed from the state (ideal interface) in which the inner wall surface of the tank is fully covered by the liquid. In this case, as shown in FIG 5, under the condition that the fill ratio of the liquid is 2% in FIG. 4, a temperature (A) of a wall region in contact with the liquid is lowered relative to a temperature to be estimated in the case of the ideal interface (see the arrowed line a in FIG 5), and a temperature (B) of a wall region in contact with only gas is increased relative to a temperature to be estimated in the case of the ideal interface (see the arrowed line b in FIG 5). As above, when the amount of the liquid is relatively small, such a temperature distribution occurs. Thus, it is critical to know whether the temperature sensor measures a temperature of the wall region in contact with the liquid or a temperature of the wall region in contact with gas.

### B. Apparatus for Detecting Position of Liquid Surface

FIG 6 is a schematic diagram showing a configuration of an apparatus for detecting a position of a liquid surface, according to another embodiment of the present invention. This apparatus comprises a tank 11 housing a liquid holding mechanism 12 for holding a liquid L at a given position based on a surface tension under a microgravity environment, irrespective of a direction of gravitational force. It is understood that this tank is shown as one example of a tank for use in cosmic environments.

A plurality of heating/temperature measurement devices 13 are arranged at given intervals in a region of the tank 11 where the liquid L is held by the liquid holding mechanism 12, i.e., on an arc which extends along an outer wall surface of the tank 11 to connect a top and a bottom of the tank 11 (in FIG 6, the heating/temperature measurement devices 13 are shown only in a region extending from the bottom by an arc length about one-fourth of an entire circumference. Each of the heating/temperature measurement devices 13 comprises a small-size heater, and a temperature sensor mounted in spaced-apart relation to the small-size heater by a given distance. The small-size heater is adapted to heat the wall of the tank 11, and the temperature sensor is adapted to measure a temporal change in temperature of the wall of the tank 11 which occurs due to the heating by the small-size heater. Each of the heating/temperature measurement devices 13 is connected to a processing unit having a storage device via a temperature controller. Even if the liquid contained in the tank 11 is heated by giving thereto the same heat energy from each of the plurality of small-size heaters, when an amount of the liquid located adjacent to a certain one of the heating/temperature measurement devices 13 is relatively large, a temperature rise rate measured by a corresponding one of the temperature sensors is relatively low, whereas, when the amount of the liquid is relatively small, the temperature rise rate is relatively high. The temperature rise rate of the wall region in contact with the liquid is also dependent on a total amount of the liquid contained in the tank 11. That is, even under a condition that the amount of the liquid contained in the tank 11 is kept constant, the temperature rise rate in the wall of the tank 11 is changed depending on a contact area between the liquid (liquid fuel) and an inner wall surface of the tank 11. In order to determine a difference in such a temperature rise rate under the condition that the amount of the liquid is kept constant, it is essential to know a position of a surface of the liquid by the temperature sensor. For this purpose, data about a correlation between a temperature change and a liquid surface position is pre-stored in the storage device. Then, the processing unit is operable, based on data about the temperature changes obtained by the temperature sensors, and the correlation data, to calculate a position of a surface of the liquid contained in the tank and output an obtained calculation result. The processing unit may be configured to calculate a volume of the liquid contained in the tank 11, based on the calculation result.

### [Example]

The following preliminary experimental test was carried out to verify a possibility to estimate a position of a surface of a liquid contained in a vessel, based on a difference in temporal temperature change at respective positions of a wall of the vessel, which is monitored when the wall is heated at each of the positions with the same heat energy.

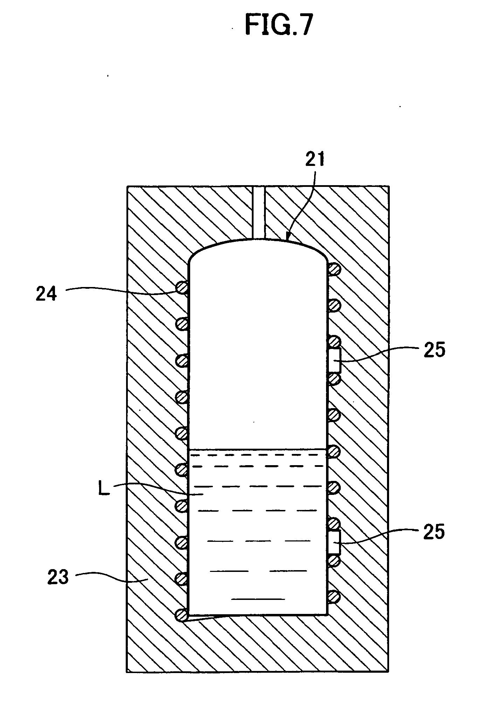

As shown in FIG. 7, a plurality of heaters (ribbon heaters) 24 and a plurality of temperature sensors (thermocouples) 25 were attached onto a sidewall of a cylindrical-shaped tank 21 formed to have an internal volume of 3 L and a height dimension of 25 cm, and filled with half-full of a liquid (water) L, and then covered by a heat insulating material 23. Then, the sidewall was heated by the heaters 24 with 12 W in total.

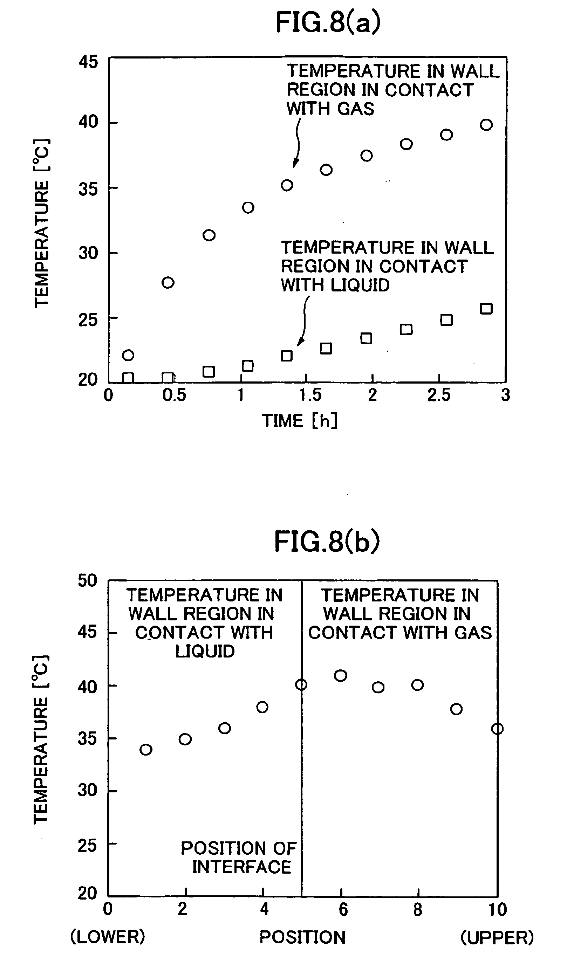

FIG 8(a) shows a temporal temperature change in the sidewall of the tank 21 monitored by the temperature sensors, in a wall region in contact with the liquid L and a wall region without any contact with the liquid L. As seen in FIG. 8(a), a difference in temperature at respective monitor positions largely appears within a relatively short time, and will continue during a period of the heating.

FIG. 8(b) shows respective temperatures at the monitor positions, which were monitored after heating for a given time by the temperature sensors 25 arranged at even intervals in a region extending from a bottom to a top of the tank 21. On the horizontal axis of the graph illustrated in FIG 8(b), respective positions are indicated on an assumption that a position of the bottom (lower end) and a position of the top (upper end) of the tank 21 are 0 and 10, respectively. As seen in FIG 8(b), a significant temperature difference is observed around a position of a gas-liquid interface (around the position 5 on the horizontal axis), and a liquid surface can be detected based on this temperature difference.

## Claims

1. An apparatus for detecting a position of a surface of a liquid (L) contained in a vessel (1, 11, 21), said apparatus comprising:
a vessel (1, 11, 21) adapted to contain therein a liquid (L);
a plurality of heating means (4, 13, 24) each provided on a wall surface of the vessel (1, 11, 21) to heat the liquid (L) contained in the vessel (1, 11, 21);
a plurality of temperature measuring means (5, 13, 25) each provided adjacent to a respective one of the plurality of heating means (4, 13, 24) in at least one-to-one correspondence therewith to measure a temperature change occurring due to the heating by a corresponding one of the plurality of heating means (4, 13, 24); and
processing means (7) operable, based on the temperature change measured by a respective at least one of the plurality of temperature measuring means (5, 13, 25), to calculate a position of a surface of the liquid (L) located adjacent to the respective at least one of the plurality of the temperature measuring means (5, 13, 25).

2. The apparatus as defined in claim 1, wherein the plurality of temperature measuring means (5, 13, 25) are arranged at even intervals on a part or an entirety of an arc which extends along the wall surface of the vessel (1, 11, 21) to connect a top and a bottom of the vessel (1, 11, 21).

3. The apparatus as defined in claim 1 or 2, wherein the processing means (7) is further operable, based on the calculated positions of the liquid surfaces, to calculate a volume of the liquid (L) contained in the vessel (1, 11, 21).

## Patentansprüche

1. Vorrichtung zum Detektieren einer Position einer Fläche bzw. Oberfläche einer Flüssigkeit (L), die in einem Behälter (1, 11, 21) enthalten ist, wobei die Vorrichtung umfasst:
einen Behälter (1, 11, 21), der angepasst ist, eine Flüssigkeit (L) in sich zu enthalten;
eine Mehrzahl von Heizmitteln (4, 13, 24), die jeweils an einer Wandfläche bzw. -oberfläche des Behälters (1, 11, 21) vorgesehen sind, um die in dem Behälter (1, 11, 21) enthaltene Flüssigkeit (L) zu erwärmen;
eine Mehrzahl von Temperaturmessmitteln (5, 13, 25), die jeweils angrenzend an bzw. benachbart zu einem jeweiligen der Mehrzahl von Heizmitteln (4, 13, 24) in zumindest Eins-zu-Eins-Entsprechung mit diesen vorgesehen sind, um eine Temperaturänderung zu messen, die auf Grund des Erwärmens durch ein entsprechendes der Mehrzahl von Heizmitteln (4, 13, 24) auftritt; und
Verarbeitungsmittel (7), die wirksam bzw. betriebsfähig sind, basierend auf der Temperaturänderung, die von einem jeweiligen zumindest einem der Mehrzahl von Temperaturmessmitteln (5, 13, 25) gemessen wird, eine Position einer Fläche bzw. Oberfläche der Flüssigkeit (L) zu berechnen, die sich angrenzend an bzw. benachbart zu dem jeweiligen zumindest einem der Mehrzahl von Temperaturmessmitteln (5, 13, 25) befindet.

2. Vorrichtung nach Anspruch 1, wobei die Mehrzahl von Temperaturmessmitteln (5, 13, 25) in gleichmäßigen Intervallen an einem Teil oder einer Gesamtheit eines Bogens angeordnet sind, der sich entlang der Wandfläche bzw.
- oberfläche des Behälters (1, 11, 21) erstreckt, um eine Oberseite und eine Unterseite des Behälters (1, 11, 21) zu verbinden.

3. Vorrichtung nach Anspruch 1 oder 2, wobei das Verarbeitungsmittel (7) ferner betriebsfähig ist, basierend auf den berechneten Positionen der Flüssigkeitsflächen bzw. -oberflächen, ein Volumen der in dem Behälter (1, 11, 21) enthaltenen Flüssigkeit (L) zu berechnen.

## Revendications

1. Dispositif de détection d'une position d'une surface d'un liquide (L) contenu dans un récipient (1, 11, 21), ledit dispositif comprenant :
un récipient (1, 11, 21) adapté pour contenir à l'intérieur un liquide (L) ;
une pluralité de moyens de chauffage (4, 13, 24) chacun placés sur une surface de paroi du récipient (1, 11, 21) pour chauffer le liquide (L) contenu dans le récipient (1, 11, 21) ;
une pluralité de moyens de mesure de température (5, 13, 25) chacun placé adjacent à l'un respectif d'une pluralité de moyens de chauffage (4, 13, 24) en correspondance au moins un à un pour mesurer un changement de température ayant lieu du fait du chauffage par l'un correspondant de la pluralité de moyens de chauffage (4, 13, 24) ; et
des moyens de traitement (7) pouvant être utilisés, en se basant sur le changement de température mesuré par l'un respectif d'au moins un de la pluralité de moyens de mesure de température (5, 13, 25), pour calculer une position d'une surface du liquide (L) située adjacente à au moins l'un respectif de la pluralité de moyens de mesure de température (5, 13, 25).

2. Dispositif selon la revendication 1, dans lequel la pluralité de moyens de mesure de température (5, 13, 25) sont agencés à intervalles égaux sur une partie ou une totalité d'un arc qui s'étend le long de la surface de paroi du récipient (1, 11, 21) pour relier un haut et un bas du récipient (1, 11, 21).

3. Dispositif selon la revendication 1 ou 2, dans lequel les moyens de traitement (7) peuvent être utilisés, en se basant sur les positions calculées des surfaces de liquide, pour calculer un volume du liquide (L) contenu dans le récipient (1, 11, 21).
